# EUROPEAN PATENT SPECIFICATION

(11) **EP 3 059 410 B1**
(45) Date of publication and mention of the grant of the patent: **07.03.2018**
(21) Application number: 14851886.3
(22) Date of filing: 07.10.2014
(51) Int. Cl.: F01N 13/08, F01N 3/28, F01N 13/16, F02B 39/00, F01N 3/24, F01N 13/18, C09D 1/00

(54) **GAS CIRCULATION MEMBER**
GASZIRKULATIONSELEMENT
ÉLÉMENT DE CIRCULATION DE GAZ

(30) Priority: 10.10.2013 JP 2013213253
(43) Date of publication of application: 24.08.2016
(73) Proprietor: Ibiden Co., Ltd., Ogaki-shi, Gifu 503-8604 (JP)
(72) Inventor: MUTSUDA, Fumiyuki, Ibi-gun Gifu 501-0695 (JP); FUJITA, Yoshitaka, Ibi-gun Gifu 501-0695 (JP)
(74) Representative: Kuhnen & Wacker
(86) International application number: PCT/JP2014/076748
(87) International publication number: WO 2015/053242

(56) References cited:
- EP-A1- 2 487 028
- EP-A1- 2 500 539
- EP-A1- 2 860 286
- WO-A1-2013/082688
- JP-A- 2001 047 559
- JP-A- 2003 253 475
- JP-A- 2010 168 998
- JP-A- 2012 167 543

## Description

### TECHNICAL FIELD

The present invention relates to a gas flow member.

### BACKGROUND ART

Engines have been made smaller to improve fuel efficiency of vehicles. One of the methods for compensating insufficient engine power accompanied by a smaller engine is to employ a turbo engine equipped with a turbocharger (supercharger).

A housing component of a turbo engine is conventionally formed of a casting (see Patent Literature 1). The surface of the casting (hereinafter also referred to as "casting surface") is usually a surface having high roughness.

In addition, in order to treat harmful substances in an exhaust gas discharged from a vehicle engine as well as a turbo engine, an exhaust gas purification apparatus including an exhaust gas treating body housed in a casing is provided in the path of an exhaust pipe.

The exhaust gas treating body typically has a round pillar shape. In this case, the casing for housing the exhaust gas treating body has a cylindrical shape. The exhaust pipe also typically also has a cylindrical shape.

Usually, the inside diameter of the casing is larger than that of the exhaust pipe, so that a cone-shaped metal component having one end portion that fits the inside diameter of the casing and having the other end portion that fits the inside diameter of the exhaust pipe is used as an exhaust system component for interconnecting the casing and the exhaust pipe.

The cone-shaped metal component is produced by a spinning process. Thus, the surface of the component has waviness resulting from the spinning process.

### CITATION LIST

### - Patent Literature

Patent Literature 1: JP2005-201093 A
Patent Literature 2: JP 2009-133213 A
Patent Literature 3: JP 2009-133214 A
Patent Literature 4: JP 2008-069383 A
Patent Literature 5: EP 2 487 028 A1

### SUMMARY OF INVENTION

### - Technical Problem

The casting as a housing component of a turbo engine has a casting surface having high roughness. In some cases, the casting surface acts as a flow resistance that interferences with the gas flow when the gas flows through the housing component, thus causing a decrease in engine output.

To solve this problem, a method is provided in which the casting surface is polished into a smooth surface. However, the inconvenience and cost of polishing have been problems, and there has been a need for a method for more easily preventing a decrease in engine output.

In the case where a component having waviness on its surface, as in a cone-shaped metal component used in an exhaust gas purification apparatus, is used in the exhaust system, disturbance occurs in the gas flow due to the metal surface having waviness, resulting in a higher heat transfer coefficient between the metal component and the exhaust gas.

Once the temperature of the exhaust gas is lowered by dissipation of heat of the exhaust gas through the metal surface in the exhaust gas purification apparatus, the temperature of an exhaust gas treating body provided in the exhaust gas purification apparatus is lowered. Consequently, the catalytic activity of a catalyst carried on the exhaust gas treating body is reduced, resulting in poor exhaust gas purification performance.

Thus, there has also been a need for a method for preventing a decrease in exhaust gas purification performance due to the waviness on the metal surface.

The present invention was made to solve these problems. An object of the present invention is to provide a gas flow member capable of preventing a decrease in engine output and a decrease in exhaust gas purification performance even when the surface of a housing component of a turbo engine or the surface of an exhaust system component is a surface having high roughness or waviness.

### - Solution to Problem

Patent Literatures 2 and 3 each disclose an exhaust pipe through which an exhaust gas flows, wherein the exhaust pipe includes a heat dissipation layer formed of a crystalline inorganic material and an amorphous inorganic material on the surface of a cylindrical metal base. Thus, a technique of forming a layer formed of a crystalline inorganic material and an amorphous inorganic material on the surface of a metal base has been known.

Likewise, as a technique of forming an inorganic material surface layer formed of a crystalline inorganic material and an amorphous inorganic material on the surface of a metal base, Patent Literature 4 discloses a structure for use in a heating furnace or the like, wherein the inorganic material surface layer is made to have a thickness of 2 to 50 µm.

In order to smoothen and flatten a surface having high roughness or a surface having waviness (such as the surface of a housing component of a turbo engine or the surface of an exhaust system component), the present inventors attempted to cover the roughness and waviness with a surface coat layer formed of a crystalline inorganic material and an amorphous inorganic material using the techniques disclosed in Patent Literatures 2 to 4 by forming the surface coat layer on the surface having high roughness or the surface having waviness.

A thick surface coat layer needs to be formed to cover the roughness and waviness. However, it is difficult of form a thick surface coat layer on the surface having roughness or waviness, and the direct application of the techniques disclosed in Patent Literatures 2 to 4 has been unsuccessful in forming a surface coat layer on the surface having high roughness and a surface having waviness to cover the roughness and waviness.

Patent Literature 5 furthermore discloses a structured body including a base material made of metal, and a surface coating layer formed on the surface of the base material, wherein the surface coating layer includes a first layer which is formed on the surface of the base material and contains an amorphous inorganic material, and a second layer which is formed as an outermost layer of the surface coating layer and contains a crystalline inorganic material having a softening point of 950°C or higher.

As a result of further extensive studies on the above problems, the present inventors arrived at the present invention.

Specifically, the gas flow member of the present invention as set forth in claim 1 includes a metal base having a gas flow surface; and
a surface coat layer containing an amorphous inorganic material and a crystalline inorganic material, the gas flow surface of the base being coated with the surface coat layer,
wherein the crystalline inorganic material contains at least one selected from the group consisting of calcia, magnesia, ceria, alumina, and zirconia,
the gas flow surface of the base is a surface having a ten-point average roughness RzJIS of a roughness curve of 10 to 50 µm and having a maximum waviness height Wz of a waviness curve of 15 to 100 um,
the roughness and waviness of the gas flow surface of the base are covered with the surface coat layer,
the surface coat layer has an average thickness of more than 50 µm, and
a coated gas flow surface which is a surface formed by covering the gas flow surface of the base with the surface coat layer is a smooth surface having a ten-point average roughness RzJIS of a roughness curve of 5 µm or less and is also a flat surface having a maximum waviness height Wz of a waviness curve of 10 µm or less.

The gas flow member of the present invention is a member through which a gas flows. The base constituting the gas flow member has a surface on which a gas flows. This surface is referred to as "gas flow surface of the base".

In the gas flow member of the present invention, the gas flow surface of the base is coated with a surface coat layer to form a coated gas flow surface.

The surface coat layer is formed to cover the roughness on the gas flow surface of the base so that the coated gas flow surface is formed as a smooth surface. As a result, interference with the gas flow due to the surface having high roughness is prevented, and a decrease in engine output is prevented. In addition, disturbance in the gas flow due to the surface having high roughness is also prevented, and a decrease in exhaust gas purification performance is also prevented.

The term "smooth surface" as used herein refers to a surface having a ten-point average roughness RzJIS (specified in JIS B0601:2001) of a roughness curve of 5 µm or less.

Further, the surface coat layer is formed to cover the waviness of the gas flow surface of the base so that the coated gas flow surface is formed as a flat surface. Thus, interference with the gas flow due to waviness on the gas flow surface of the base is prevented, and a decrease in engine output is prevented. In addition, disturbance in the gas flow due to waviness on the gas flow surface of the base is also prevented, and a decrease in exhaust gas purification performance is also prevented.

The term "flat surface" as used herein refers to a surface having a maximum waviness height Wz (specified in JIS B0601:2001) of a waviness curve of 10 µm or less.

The gas flow surface of the base is a surface having a ten-point average roughness RzJIS of a roughness curve of 10 to 50 µm and having a maximum waviness height Wz of a waviness curve of 15 to 100 µm.

When the ten-point average roughness RzJIS of a roughness curve of the gas flow surface of the base is 10 to 50 µm, the gas flow surface having such roughness is a surface having high roughness and tends to disturb the gas flow. However, covering the roughness with the surface coat layer makes the gas flow smooth and prevents a decrease in engine output. In addition, disturbance in the gas flow due to the surface having high roughness is also prevented, and a decrease in exhaust gas purification performance is also prevented.

When the maximum waviness height Wz of a waviness curve of the gas flow surface of the base is 15 to 100 µm, the gas flow surface having such waviness is considered to be a surface that acts as a flow resistance that interferes with the gas flow due to the waviness on the metal surface. Covering the waviness on the surface with the surface coat layer makes the gas flow smooth, and successfully prevents a decrease in engine output. In addition, disturbance in the gas flow due to waviness on the gas flow surface of the base is also prevented, and a decrease in exhaust gas purification performance is also further prevented.

The surface coat layer has an average thickness of more than 50 µm. If the surface coat layer is thin, it is difficult to provide a smooth and flat coated gas flow surface. However, if the surface coat layer is formed to have an average thickness of more than 50 µm, a smooth and flat coated gas flow surface can be provided.

The surface coat layer contains an amorphous inorganic material and a crystalline inorganic material. The crystalline inorganic material contains at least one selected from the group consisting of calcia, magnesia, ceria, alumina, and zirconia.

These types of crystalline inorganic materials do not form a complex oxide upon reaction with elements in the base, and are less likely to produce, in the surface coat layer, voids that interfere with the layer formation. Thus, these crystalline inorganic materials are suitable in forming a surface coat layer having an average thickness of more than 50 µm.

If a complex oxide is formed in the surface coat layer, voids that interfere with the layer formation may be produced in the surface coat layer in the course of the formation of the complex oxide. This makes it difficult for form a thick surface coat layer having an average thickness of more than 50 µm.

In the gas flow member of the present invention, preferably, the gas flow surface of the base is a casting surface.

In the gas flow member of the present invention, the roughness on the casting surface can be covered with the surface coat layer and thus smoothened so as to effectively prevent a decrease in engine output and a decrease in exhaust gas purification performance.

In the gas flow member of the present invention, preferably, the gas flow surface of the base is a spinning-processed surface.

In the gas flow member of the present invention, the waviness on the surface of the spinning-processed surface can be covered with the surface coat layer and thus flattened so as to effectively prevent a decrease in engine output and a decrease in exhaust gas purification performance.

In the gas flow member of the present invention, preferably, the crystalline inorganic material contains at least one of α-alumina and yttria-stabilized zirconia.

The presence of at least one of the above compounds as the crystalline inorganic material can improve heat resistance and mechanically reinforce the surface coat layer while contributing to improving insulation properties of the gas flow member.

In the gas flow member of the present invention, preferably, the amorphous inorganic material is formed of low-melting glass having a softening point of 300°C to 1000°C.

In the gas flow member of the present invention, if the amorphous inorganic material is formed of low-melting glass having a softening point of 300°C to 1000°C, a coating layer formed on the gas flow surface of the base using means such as application can be relatively easily formed into a surface coat layer by heating.

If the low-melting glass has a softening point of lower than 300°C, a layer to be formed into a surface coat layer tends to flow due to melting during heat treatment because the softening point temperature is excessively low, making it difficult to form a layer having an appropriate thickness. In contrast, if the low-melting glass has a softening point of higher than 1000°C, the heat treatment temperature needs to be extremely high, and the heat may degrade the mechanical characteristics of the base. In addition, the surface coat layer containing such an amorphous inorganic material cannot follow the changes associated with thermal expansion of the base caused by the temperature. This may cause cracking in the surface coat layer and the cracked pieces may fall off.

In the gas flow member of the present invention, preferably, the low-melting glass contains at least one of barium glass, boron glass, strontium glass, alumina silicate glass, soda-zinc glass, and soda-barium glass.

In the gas flow member of the present invention, if the amorphous inorganic material contains low-melting glass selected from the above materials, it is possible to form a surface coat layer having a low thermal conductivity, heat resistance, durability, and insulation properties can be formed on the gas flow surface of the base.

Preferably, the gas flow member of the present invention is an exhaust system component for a turbo housing.

If an exhaust system component for turbo housing is the gas flow member of the present invention, a decrease in engine output can be prevented because the coated gas flow surface is a smooth surface, and the purpose of mounting a turbo engine can be suitably achieved.

Preferably, the gas flow member of the present invention is an exhaust system component that serves as a gas inlet portion or a gas outlet portion of an exhaust gas purification apparatus.

If an exhaust system component that serves as a gas inlet portion or a gas outlet portion of an exhaust gas purification apparatus is the gas flow member of the present invention, disturbance in the gas flow can be prevented because the coated gas flow surface is a flat surface and the temperature of the exhaust gas is less likely to be lowered, thus preventing a decrease in exhaust gas purification performance.

### BRIEF DESCRIPTION OF DRAWINGS

Fig. 1(a) is a schematic top view of an example of a turbine housing. Fig. 1(b) is a schematic top view of an example of a turbine housing in which a surface coat layer is formed on a gas flow surface. Fig. 1(c) is a cross-sectional view of Fig. 1(b) taken along line A-A.
Fig. 2(a) is a schematic perspective view of an example of an exhaust manifold. Fig. 2 (b) is a cross-sectional view of the exhaust manifold of Fig. 2(a) taken along line B-B. Fig. 2(c) is a schematic cross-sectional view of an example of an exhaust manifold in which a surface coat layer is formed on a gas flow surface.
Fig. 3 is a schematic cross-sectional view of an example of an exhaust gas purification apparatus.
Fig. 4(a) is a schematic partially-cut perspective view of an example of a base that serves as a gas inlet portion or a gas outlet portion of an exhaust gas purification apparatus. Fig. 4(b) is an enlarged view of a region indicated by C in Fig. 4(a). Fig. 4(c) is a schematic partially-cut perspective view of an example of a gas flow member in which a surface coat layer is formed on a gas flow surface.
Fig. 4(d) is an enlarged view of a region indicated by D in Fig. 4(c).

### DESCRIPTION OF EMBODIMENTS

The present invention is specifically described below. The present invention should not be limited to the following embodiments, and suitable modifications may be made without departing from the scope of the appended claims.

The gas flow member of the present invention is described below.
The gas flow member of the present invention includes a metal base having a gas flow surface; and
a surface coat layer containing an amorphous inorganic material and a crystalline inorganic material, the gas flow surface of the base being coated with the surface coat layer,
wherein the crystalline inorganic material contains at least one selected from the group consisting of calcia, magnesia, ceria, alumina, and zirconia,
the gas flow surface of the base is a surface having a ten-point average roughness RzJIS of a roughness curve of 10 to 50 µm and having a maximum waviness height Wz of a waviness curve of 15 to 100 µm,
the roughness and waviness of the gas flow surface of the base are covered with the surface coat layer,
the surface coat layer has an average thickness of more than 50 µm, and
a coated gas flow surface which is a surface formed by covering the gas flow surface of the base with the surface coat layer is a smooth surface having a ten-point average roughness RzJIS of a roughness curve of 5 µm or less and is also a flat surface having a maximum waviness height Wz of a waviness curve of 10 µm or less.

The gas flow member of the present invention can be used as a housing component of a turbo engine or as an exhaust system component that serves as a gas inlet portion or a gas outlet portion of an exhaust gas purification apparatus.

First, the gas flow member of the present invention to be used as a turbine housing is described as an example of a housing component of a turbo engine.

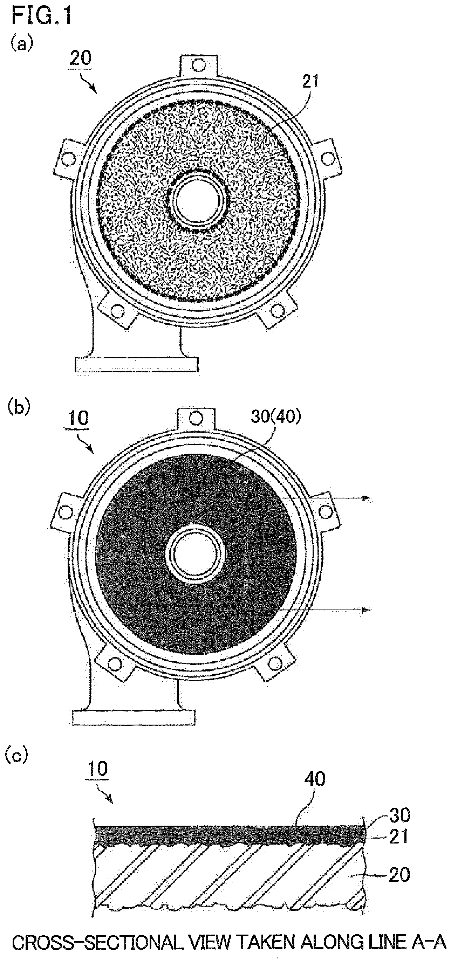

Fig. 1 (a) is a schematic top view of an example of a turbine housing. Fig. 1(b) is a schematic top view of an example of a turbine housing in which a surface coat layer is formed on a gas flow surface. Fig. 1(c) is a cross-sectional view of Fig. 1(b) taken along line A-A.

Fig. 1(a) shows a turbine housing 20. The turbine housing 20 is a metal base (base 20) having a gas flow surface.

A highly heat-resistant casting is suitably used as a material of the base 20. Examples include austenitic heat-resistant cast steel, austenitic heat-resistant cast iron, ferritic heat-resistant cast steel, and ferritic heat-resistant cast iron. In a turbo engine, a turbine impeller is housed in the turbine housing 20, and an exhaust gas discharged from the engine flows through the turbine housing 20. In the turbine housing 20 shown in Fig. 1(a), the exhaust gas flows through the region between two dashed circles, so that the surface of the base constituting the region is a gas flow surface 21.

As described above, when a casting is used as a material of the base, the gas flow surface is a casting surface. Generally, the casting surface is a surface having high roughness. For example, the ten-point average roughness RzJIS of the casting surface is 10 to 50 µm, preferably 10 to 30 µm, more preferably 12 to 19 µm.

As for the waviness on the casting surface, the maximum waviness height Wz of a waviness curve is 15 to 100 µm, preferably 15 to 50 µm, more preferably 19 to 38 µm.

The ten-point average roughness RzJIS and the maximum waviness height Wz of the casting surface are specified in JIS B0601:2001, and can be measured using a measuring device "One-shot 3D Measuring Macroscope VR-3000" available from Keyence Corporation at 25°C under the following conditions: a cutoff value λs = no setting, λc = 0.8 mm, and a measurement distance = 4 mm.

The minimum thickness of the base is preferably 0.2 mm, more preferably 0.4 mm. The maximum thickness is preferably 10 mm, more preferably 4 mm.

If the base has a thickness of less than 0.2 mm, the gas flow member has insufficient strength. If the base has a thickness of more than 10 mm, the gas flow member has an increased weight. Such a gas flow member cannot be easily mounted in a vehicle and is not suitable for actual use.

As shown in Fig. 1(b) and Fig. 1(c), the gas flow surface 21 of the base 20 is covered with a surface coat layer 30, and the roughness of the gas flow surface 21 is thus smoothened by the surface coat layer 30.

A gas flow member 10 of the present invention includes the base 20 and the surface coat layer 30, the gas flow surface 21 of the base 20 being coated with the surface coat layer 30.

A coated gas flow surface 40 which is a surface formed by covering the gas flow surface 21 of the base with the surface coat layer 30 is a smooth surface having a ten-point average roughness RzJIS of 5 µm or less. The ten-point average roughness RzJIS of the coated gas flow surface 40 is preferably 4 to 5 µm.

In addition, the coated gas flow surface 40 is also a flat surface having a maximum waviness height Wz of 10 µm or less. The maximum waviness height Wz of the coated gas flow surface 40 is preferably 7 to 10 µm.

The roughness and waviness on the coated gas flow surface can be measured using the same device under the same conditions as in the measurement of the roughness and waviness on the casting surface.

The surface coat layer is a layer containing an amorphous inorganic material. Preferably, the amorphous inorganic material is low-melting glass having a softening point of 300°C to 1000°C.

The low-melting glass may be any type, but preferably, it contains at least one of barium glass, boron glass, strontium glass, alumina silicate glass, soda-zinc glass, and soda-barium glass.

These types of glass may be used alone or in combination of two or more thereof as described above.

The surface coat layer may contain pores.

If the low-melting glass has a softening point in the range of 300°C to 1000°C as described above, the surface coat layer can be easily formed on the gas flow surface of the metal base by heating and firing a coating of the molten low-melting glass applied to the surface of the base (metal material). Such a surface coat layer has excellent adhesion to the base.

If the low-melting glass has a softening point of lower than 300°C, a layer to be formed into a surface coat layer tends to flow due to melting during heat treatment because the softening point temperature is excessively low, making it difficult to form a layer having a uniform thickness. In contrast, if the low-melting glass has a softening point of higher than 1000°C, the heat treatment temperature needs to be extremely high, and the heat may degrade the mechanical characteristics of the base.

The softening point can be measured by using, for example, an automatic measuring apparatus of glass softening and strain points (SSPM-31) available from OPT Corporation, based on the method specified in JIS R 3103-1:2001.

The surface coat layer further contains a crystalline inorganic material that contains at least one selected from the group consisting of calcia, magnesia, ceria, alumina, and zirconia.

Specific examples of crystalline inorganic materials containing zirconia include yttria-stabilized zirconia, CaO-stabilized zirconia, MgO-stabilized zirconia, zircon, and CeO-stabilized zirconia.

Among these crystalline inorganic materials, α-alumina and yttria-stabilized zirconia, which have excellent heat resistance and excellent corrosion resistance, are preferred.

The average particle diameter of the crystalline inorganic material is preferably 0.1 to 50 µm, more preferably 5 to 50 µm.

The weight ratio of the crystalline inorganic material to the total weight of the amorphous inorganic material and crystalline inorganic material in the surface coat layer is preferably 10 to 70% by weight, more preferably 15 to 65% by weight.

The surface coat layer is formed to be thick with an average thickness of more than 50 µm. Thus, the surface coat layer can cover the roughness and waviness on the gas flow surface of the base, resulting in a coated gas flow surface having a flat and smooth surface.

The average thickness of the surface coat layer is preferably 100 µm or more, more preferably 200 µm or more. The maximum average thickness of the surface coat layer is preferably 1000 µm, more preferably 750 µm.

The average thickness of the surface coat layer can be measured using a thickness meter. In the case of using Dualscope MP40 available from Fischer Instruments K. K. , the average thickness of the surface coat layer can be determined by calibrating the thickness based on readings at any 30 points, measuring the thickness at 10 points, and averaging the readings at these points.

When the thickness is measured at 10 points, any 10 points are selected, preferably in such a manner that measurement points are not disproportionately concentrated in the measurement region. For example, the measurement may be carried out at equal intervals of 1 mm.

The gas flow member of the present invention can be produced by applying a coating composition for forming a surface coat layer on the gas flow surface of the metal base and forming a surface coat layer on the gas flow surface.

Examples of materials of the coating composition for forming a surface coat layer include a powder of the amorphous inorganic material and a powder of the crystalline inorganic material described above. Other components such as a dispersion medium and an organic binder may also be contained.

Examples of the dispersion medium include water and organic solvents such as methanol, ethanol, and acetone. The blending ratio of the powder of the coating composition and the dispersion medium in the amorphous inorganic material is not limited, but preferably, the dispersion medium is contained in an amount of 50 to 150 parts by weight based on 100 parts by weight of the powder of the amorphous inorganic material. The coating composition with such a blending ratio has a viscosity suitable for application to the base.

Examples of the organic binder include polyvinyl alcohol, methyl cellulose, ethyl cellulose, and carboxymethyl cellulose. These may be used alone or in combination of two or more thereof. In addition, the organic binder may be used in combination with a dispersion medium.

A method for preparing the coating composition and a method for producing the gas flow member using the coating composition are described below.

### (1) Step of providing a metal base

A metal base having a gas flow surface (hereinafter also referred to as "base") is prepared. The base is subjected to washing treatment to remove impurities from the gas flow surface of the base.

The washing treatment is not limited, and any conventionally known washing treatment can be employed. Specific examples include methods such as ultrasonic washing in an alcohol solvent.

### (2) Step of forming a surface coat layer

Components such as a crystalline inorganic material and an amorphous inorganic material are mixed to prepare a coating composition.

Specifically, for example, a powder of a crystalline inorganic material and a powder of an amorphous inorganic material are prepared to a predetermined particle size and shape, and these powders are dry-mixed at a predetermined blending ratio into a mixed powder. The mixed powder is further blended with water and wet-mixed in a ball mill into a coating composition.

The mixed powder and water may be blended at any ratio, but preferably, the amount of water is about 100 parts by weight based on 100 parts by weight of the mixed powder. The coating composition with such a blending ratio has a viscosity suitable for application to the base. In addition, if necessary, the coating composition may contain other components such as a dispersion medium (e.g., an organic solvent) and an organic binder as described above.

### (3) Next, the coating composition is applied to the gas flow surface of the base.

Examples of methods for applying the coating composition include spray coating, electrostatic coating, inkjet printing, transfer printing with an instrument such as a stamp and a roller, brush coating, and electrodeposition.

### (4) Subsequently, the base coated with the coating composition is subject to firing treatment.

Specifically, the base coated with the coating composition is dried and then fired by heating into a surface coat layer.

Preferably, the firing temperature is equal to or higher than the softening point of the amorphous inorganic material. Although it depends on the type of the amorphous inorganic material, the firing temperature is preferably in the range of 700°C to 1100°C. If the firing temperature is equal to or higher than the softening point, strong adhesion can be achieved between the base and the amorphous inorganic material, and it is thus possible to form a surface coat layer strongly adhered to the base.

Through the above procedure, the gas flow member 10 of the present invention shown in Fig. 1 that is used as a turbine housing, which is an example of the gas flow member of the present invention, can be produced.

Next, the gas flow member of the present invention that is used as an exhaust manifold is described as another example of the housing component of a turbo engine.

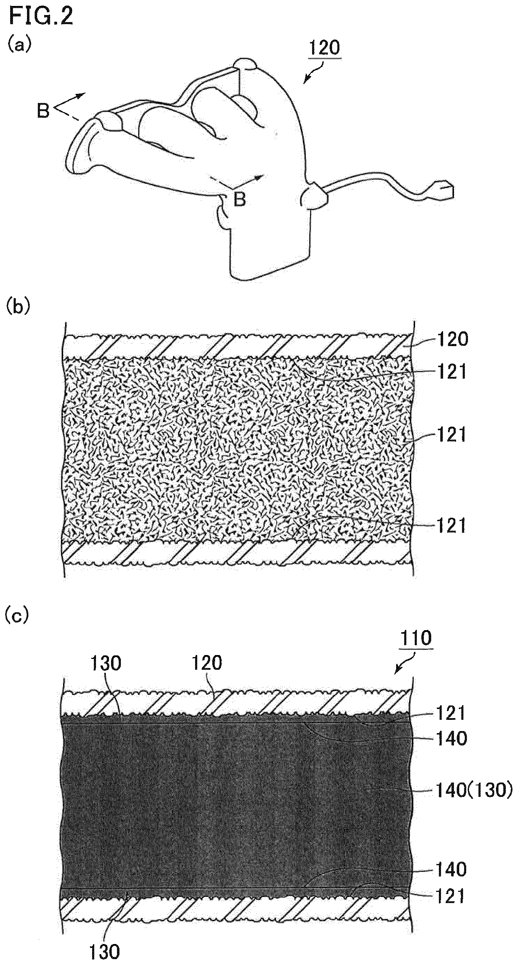

Fig. 2(a) is a schematic perspective view of an example of an exhaust manifold. Fig. 2(b) is a cross-sectional view of the exhaust manifold of Fig. 2(a) taken along line B-B.

Fig. 2(c) is a schematic cross-sectional view of an example of an exhaust manifold in which a surface coat layer is formed on a gas flow surface.

Fig. 2 (a) and Fig. 2 (b) show an exhaust manifold 120. The exhaust manifold 120 is a base (base 120) including a metal pipe.

In a turbo engine, an exhaust gas discharged from each combustion chamber of the engine flows through the exhaust manifold 120. In the exhaust manifold 120 shown in Fig. 2(a) and Fig. 2(b), an exhaust gas flows through the metal pipe, so that the inner peripheral surface of the metal pipe is a gas flow surface 121.

As is the case with the turbine housing described above, a highly heat-resistant casting is preferably used as a material of the exhaust manifold. In such a case, the gas flow surface is a casting surface.

Preferred forms of the exhaust manifold as the metal base are the same as those described for the case where the metal base is a turbine housing. Preferred forms of surface roughness and waviness on the gas flow surface of the base are also the same.

As shown in Fig. 2(c), the gas flow surface 121 of the base 120 is covered with a surface coat layer 130, and the roughness of the gas flow surface 121 is thus smoothened by the surface coat layer 130.

A gas flow member 110 of the present invention includes the base 120 and the surface coat layer 130, the gas flow surface 121 of the base 120 being coated with the surface coat layer 130.

A coated gas flow surface 140 which is a surface formed by covering the gas flow surface 121 of the base with the surface coat layer 130 is a smooth surface having a ten-point average roughness RzJIS of 5 µm or less. In addition, the coated gas flow surface 140 is also a flat surface having a maximum waviness height Wz of 10 µm or less.

Preferred forms of the surface coat layer 130 are the same as those described for the case where the metal base is a turbine housing.

The surface coat layer 130 has an average thickness of more than 50 µm, and the preferred thickness range of the surface coat layer is also the same as that described for the case where the metal base is a turbine housing.

A method for producing the gas flow member when the gas flow member of the present invention is an exhaust manifold is the same as that for the case where the gas flow member is a turbine housing.

A preferred method for applying the coating composition is one that is suitable for applying the coating composition to the inner peripheral surface of the metal pipe.

Subsequently, an example in which the gas flow member of the present invention is used as an exhaust system component that serves as a gas inlet portion or a gas outlet portion of an exhaust gas purification apparatus is described.

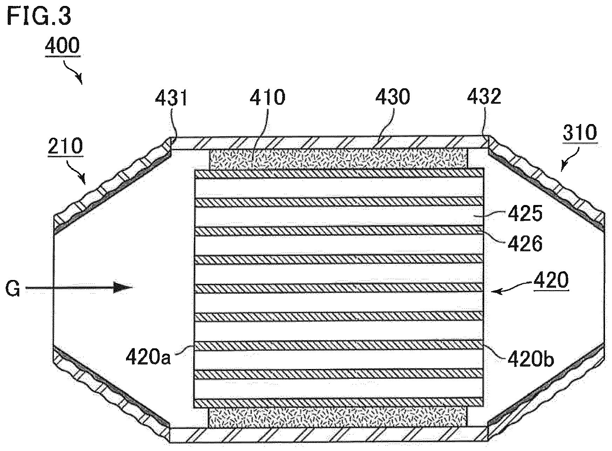

Fig. 3 is a schematic cross-sectional view of an example of an exhaust gas purification apparatus.

In an exhaust gas purification apparatus 400 shown in Fig. 3, an exhaust gas treating body 420 is housed in a cylindrical casing 430. A holding sealing material 410 which is a mat formed of inorganic fibers is wound around the exhaust gas treating body 420.

In Fig. 3, the direction of exhaust gas flow is indicated by an arrow G. An exhaust gas flows into through holes 425 opened both at exhaust gas inlet-side end face 420a and an exhaust gas outlet-side end face 420b of the exhaust gas treating body 420, and the exhaust gas is catalytically purified in the presence of a catalyst carried on partition walls 426 each separating the through holes 425 from each other.

A gas flow member 210 is provided as a gas inlet portion through which an exhaust gas flows into the exhaust gas purification apparatus 400. A gas flow member 310 is also provided as a gas outlet portion through which the exhaust gas flows out.

The gas flow member 210 is disposed at a gas inlet-side end portion 431 of the casing 430 by bonding means such as welding. The gas flow member 210 is a cylindrical member whose diameter gradually tapers as the gas flow member 210 extends away from the gas inlet-side end portion 431 of the casing 430.

The gas flow member 310 is disposed at a gas outlet-side end portion 432 of the casing 430 by bonding means such as welding. As is the case with the gas flow member 210, the gas flow member 310 is also a cylindrical member whose diameter gradually tapers as the gas flow member 310 extends away from the gas outlet-side end portion 432 of the casing 430.

The gas flow member of the present invention can be used as an exhaust system component that serves as the gas flow member 210 and/or the gas flow member 310 in the exhaust gas purification apparatus shown in Fig. 3.

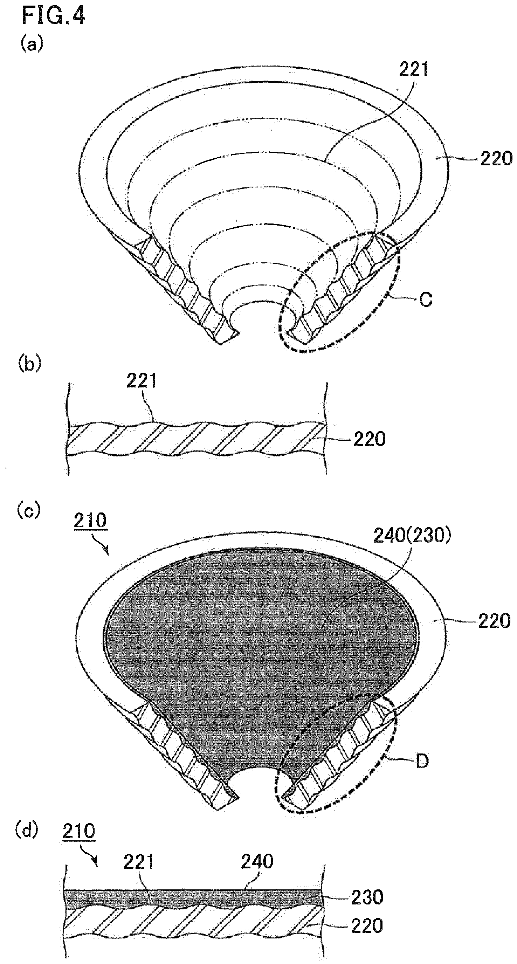

Fig. 4(a) is a schematic partially-cut perspective view of an example of a base that serves as a gas inlet portion or a gas outlet portion of an exhaust gas purification apparatus. Fig. 4(b) is an enlarged view of a region indicated by C in Fig. 4(a).

Fig. 4(c) is a schematic partially-cut perspective view of an example of a gas flow member in which a surface coat layer is formed on a gas flow surface. Fig. 4(d) is an enlarged view of a region indicated by D in Fig. 4(c).

The gas flow member 210 that serves as a gas inlet portion of an exhaust gas purification apparatus is described below. The gas flow member 310 that serves as a gas outlet portion of an exhaust gas purification apparatus may have the same structure as described below.

Fig. 4(a) shows a base 220 that serves as a gas inlet portion of an exhaust gas purification apparatus. The base 220 has a gas flow surface 221.

Examples of materials of the base 220 include metals such as stainless steel, steel, iron, and copper, and nickel alloys such as lnconel, Hastelloy, and lnvar.

Because of its shape, the base 220 is preferably produced by a spinning process. When the base 220 is produced by the spinning process, the surface thereof is a spinning-processed surface, and the spinning-processed surface has waviness resulting from the spinning process.

Fig. 4(a) and Fig. 4(b) show the resulting waviness on the gas flow surface 221.

The maximum waviness height Wz of a waviness curve on the spinning-processed surface is, for example, 15 to 100 µm, preferably 15 to 50 µm, more preferably 19 to 38 µm.

As for the surface roughness of the spinning-processed surface, the ten-point average roughness RzJIS of the surface is 10 to 50 µm, preferably 10 to 30 µm, more preferably 12 to 19 µm.

The ten-point average roughness RzJIS and the maximum waviness height Wz of the spinning-processed surface are specified in JIS B0601:2001, and can be measured using a measuring device "One-shot 3D Measuring Macroscope VR-3000" available from Keyence Corporation at 25°C under the following conditions: a cutoff value λs = no setting, λc = 0.8 mm, and a measurement distance = 4 mm.

The preferred thickness range of the base 220 is the same as that of the base used as the turbine housing described above.

As shown in Fig. 4(c) and Fig. 4(d), the gas flow surface 221 of the base 220 is covered with the surface coat layer 230. The waviness on the gas flow surface 221 is thus flattened by the surface coat layer 230.

The gas flow member 210 of the present invention includes the base 220 and the surface coat layer 230, the gas flow surface 221 of the base 220 being coated with the surface coat layer 230.

A coated gas flow surface 240 which is a surface formed by covering the gas flow surface 221 of the base with the surface coat layer 230 is a flat surface having a ten-point average roughness RzJIS of 10 µm or less. In addition, the coated gas flow surface 240 is also a smooth surface having a ten-point average roughness of 5 µm or less.

The roughness and waviness on the coated gas flow surface can be measured using the same device under the same conditions as in the measurement of the roughness and waviness on the spinning-processed surface.

The surface coat layer 230 is a layer containing an amorphous inorganic material and a crystalline inorganic material. Preferred forms of the amorphous inorganic material and crystalline inorganic material are the same as those described for the exemplified amorphous inorganic material and crystalline inorganic material in the surface coat layer of the gas flow member described above that is used as a turbine housing. Thus, a detailed description thereof is omitted.

The surface coat layer 230 is formed to be thick with an average thickness of more than 50 µm. The average thickness of the surface coat layer can be measured using the thickness meter and the method described above.

A method for producing the gas flow member when the gas flow member of the present invention is an exhaust system component that serves as a gas inlet portion or a gas outlet portion of an exhaust gas purification apparatus is the same as that for the case where the gas flow member is a turbine housing.

A preferred method for applying the coating composition is one that is suitable for applying the coating composition to the inner peripheral surface of the metal pipe.

In the case of producing an exhaust gas purification apparatus using a gas flow member as an exhaust system component that serves as a gas inlet portion or a gas outlet portion of an exhaust gas purification apparatus, preferably, the production method includes providing a gas flow member having a surface coat layer formed thereon and bonding an end portion of a casing to the gas flow member by means such as welding.

The effects of the gas flow member of the present invention are listed below.
(1) In the gas flow member of the present invention, the gas flow surface of the base is coated with a surface coat layer to form a coated gas flow surface.
   The surface coat layer is formed to cover the roughness on the gas flow surface of the base so that the coated gas flow surface is formed as a smooth surface. As a result, interference with the gas flow due to the surface having high roughness is prevented, and a decrease in engine output is prevented.
   In addition, disturbance in the gas flow due to the surface having high roughness is also prevented, and a decrease in exhaust gas purification performance is also prevented.
(2) In the gas flow member of the present invention, the surface coat layer is formed to cover the waviness of the gas flow surface of the base so that the coated gas flow surface is formed as a flat surface. Thus, interference with the gas flow due to waviness on the gas flow surface of the base is prevented, and a decrease in engine output is prevented. In addition, disturbance in the gas flow due to waviness on the gas flow surface of the base is also prevented, and a decrease in exhaust gas purification performance is also prevented.
(3) If the gas flow member of the present invention is an exhaust system component for turbo housing, a decrease in engine output can be prevented because the coated gas flow surface is a smooth surface, and the purpose of mounting a turbo engine can be suitably achieved.
(4) If the gas flow member of the present invention is an exhaust system component that serves as a gas inlet portion or a gas outlet portion of an exhaust gas purification apparatus, disturbance in the gas flow can be prevented because the coated gas flow surface is a flat surface and the temperature of the exhaust gas is less likely to be lowered, thus preventing a decrease in exhaust gas purification performance.

### EXAMPLES

Examples that more specifically disclose the gas flow member of the present invention are described below. The present invention is not limited to these examples.

### (Example 1)

### (1) Provision of a base

As a metal base, a casting (austenitic heat-resistant cast steel) whose surface corresponding to the gas flow surface is a casting surface was provided.

The ten-point average roughness RzJIS and the maximum waviness height Wz of the casting surface were measured using a measuring device "One-shot 3D Measuring Macroscope VR-3000" available from Keyence Corporation under the following conditions: a cutoff value λs = no setting and λc = 0.8 mm. As a result, the RzJIS was 19 µm, and the Wz was 19 µm.

### (2) Preparation of a coating composition

As a powder of an amorphous inorganic material, K4006A-100M (Bi₂O₃-B₂O₃-based glass having a softening point of 770°C) available from Asahi Glass Co., Ltd was provided.

YSZ (yttria-stabilized zirconia) was added as particles of a crystalline inorganic material to obtain a mixed powder.

The weight ratio of the crystalline inorganic material to the total weight of the amorphous inorganic material and crystalline inorganic material was 35% by weight.

Further, as an organic binder, methylcellulose (product name: METOLOSE-65SH) available from Shin-Etsu Chemical Co., Ltd. was provided and added to the mixed powder to a concentration of 0.05% by weight based on the total coating composition.

To prepare a coating composition, the mixed powder was further blended with water to a concentration of 60% by weight based on the total coating composition, and wet-mixed in a ball mill into a coating composition.

The average particle diameter of YSZ after preparation was 25 µm.

### (3) Production of a gas flow member

The prepared coating composition was applied to the casting surface of the base by a spray coating method, and dried in a drying apparatus at 70°C for 20 minutes. Subsequently, the coating composition was fired by heating in an air at 850°C for 90 minutes. Thus, a surface coat layer was formed.

### (4) Evaluation of the produced gas flow member

### (i) Thickness measurement

The average thickness of the surface coat layer was 500 µm. The average thickness of the surface coat layer was measured using Dualscope MP40 available from Fischer Instruments K.K. After calibrating the thickness based on readings at any 30 points, the thickness was measured at 10 points, and the readings at these points were averaged to give an average thickness.

### (ii) Measurement of surface roughness and waviness

The surface roughness and waviness on the surface of the surface coat layer (i.e., the coated gas flow surface) was determined by measuring the ten-point average roughness RzJIS and the maximum waviness height Wz using a measuring device "One-shot 3D Measuring Macroscope VR-3000" available from Keyence Corporation under the following conditions: a cutoff value λs = no setting and λc = 0.8 8 mm. As a result, the RzJIS was 4 µm, and the Wz was 7 µm.

Table 1 collectively shows these results. The values of the surface roughness and waviness were low in the gas flow member produced in Example 1. Thus, the gas flow member is considered to be capable of preventing a decrease in engine output and a decrease in exhaust gas purification performance, and was therefore given an overall rating of "Good".

### (Example 2)

A gas flow member was produced as in Example 1, except that a coating composition was prepared by using α-alumina as particles of the crystalline inorganic material instead of YSZ and changing the weight ratio of the crystalline inorganic material to the total weight of the amorphous inorganic material and crystalline inorganic material to 15% by weight.

The average particle diameter of α-alumina after preparation of the coating composition was 10 µm.

Table 1 shows the measurement results of the thickness, surface roughness, and waviness, along with overall ratings.

### (Example 3)

As a metal base, a base (made of stainless steel) whose surface corresponding to the gas flow surface is a spinning-processed surface was provided.

The ten-point average roughness RzJIS and the maximum waviness height Wz of the spinning-processed surface were measured using a measuring device "One-shot 3D Measuring Macroscope VR-3000" available from Keyence Corporation under the following conditions: a cutoff value λs = no setting and λc = 0.8 mm. As a result, the RzJIS was 12 µm, and the Wz was 38 µm.

A gas flow member was produced as in Example 1, except that a coating composition was prepared by using YSZ and changing the weight ratio of the crystalline inorganic material to the total weight of the amorphous inorganic material and crystalline inorganic material to 60% by weight.

The average particle diameter of YSZ after preparation of the coating composition was 10 µm.

Table 1 shows the measurement results of the thickness, surface roughness, and waviness, along with overall ratings.

### (Comparative Examples 1 and 2)

The surface roughness and waviness of a surface corresponding to the gas flow surface of the base used in Example 1 were measured for Comparative Example 1. Table 1 shows the results.

The surface roughness and waviness of a surface corresponding to the gas flow surface of the base used in Example 3 were measured for Comparative Example 2. Table 1 shows the results.

The values of the surface roughness and waviness were high in these bases. Thus, these bases are considered to result in a decrease in engine output and a decrease in exhaust gas purification performance, and were therefore each given an overall rating of "Poor".

**[Table 1]**

| | Material of gas flow member | Surface coat layer | Physical properties of surface coat layer | | | | Surface roughness RzJIS (µm) | Maximum waviness height Wz (µm) | Overall rating |
|---|---|---|---|---|---|---|---|---|---|
| | | | Crystalline inorganic material | | | Thickness (µm) | | | |
| | | | Type | Average particle size (µm) | Amount (wt%) | | | | |
| Example 1 | Casting surface | Formed | YSZ | 25 | 35 | 500 | 4 | 7 | Good |
| Example 2 | Casting surface | Formed | Alumina | 10 | 15 | 200 | 5 | 8 | Good |
| Example 3 | Drawing-processed surface | Formed | YSZ | 10 | 60 | 750 | 5 | 10 | Good |
| Comparative Example 1 | Casting surface | Not formed | - | - | - | - | 19 | 19 | Poor |
| Comparative Example 2 | Drawing-processed surface | Not formed | - | - | - | - | 12 | 38 | Poor |

| | | | | | | | | | |
|---|---|---|---|---|---|---|---|---|---|
| For the surface roughness and the waviness, the coated gas flow surface was measured for Examples 1 to 3, and the gas flow surface was measured for Comparative Examples 1 and 2. | | | | | | | | | |

### REFERENCE SIGNS LIST

10, 110, 210 gas flow member
20, 120, 220 base
21, 121, 221 gas flow surface
30, 130, 230 surface coat layer
40, 140, 240 coated gas flow surface

## Claims

1. A gas flow member (10, 110, 210), comprising:
a metal base (20, 120, 220) having a gas flow surface (21, 121, 221); and
a surface coat layer (30, 130, 230) containing an amorphous inorganic material and a crystalline inorganic material, the gas flow surface (21, 121, 221) of the base being coated with the surface coat layer (30, 130, 230),
wherein the crystalline inorganic material comprises at least one selected from the group consisting of calcia, magnesia, ceria, alumina, and zirconia,
and wherein the surface coat layer (30, 130, 230) has an average thickness of more than 50 µm,
**characterized in that**
the gas flow surface (21, 121, 221) of the base is a surface having a ten-point average roughness RzJIS of a roughness curve of 10 to 50 µm and having a maximum waviness height Wz of a waviness curve of 15 to 100 µm,
the roughness and waviness of the gas flow surface (21, 121, 221) of the base are covered with the surface coat layer (30, 130, 230), and
a coated gas flow surface (21, 121, 221) which is a surface formed by covering the gas flow surface (21, 121, 221) of the base with the surface coat layer (30, 130, 230) is a smooth surface having a ten-point average roughness RzJIS of a roughness curve of 5 µm or less and is also a flat surface having a maximum waviness height Wz of a waviness curve of 10 µm or less,
wherein the ten-point average roughness RzJIS and the maximum waviness height Wz are specified in JIS B0601:2001 and measured with a cutoff value λs = no setting, λc = 0.8 mm, and a measurement distance = 4 mm.

2. The gas flow member (10, 110, 210) according to claim 1,
wherein the gas flow surface (21, 121, 221) of the base is a casting surface.

3. The gas flow member (10, 110, 210) according to claim 1,
wherein the gas flow surface (21, 121, 221) of the base is a spinning-processed surface.

4. The gas flow member (10, 110, 210) according to any one of claims 1 to 3,
wherein the crystalline inorganic material comprises at least one of α-alumina and yttria-stabilized zirconia.

5. The gas flow member (10, 110, 210) according to any one of claims 1 to 4,
wherein the amorphous inorganic material is formed of low-melting glass having a softening point of 300°C to 1000°C, wherein the softening point is measured based on JIS R 3103-1:2001.

6. The gas flow member (10, 110, 210) according to claim 5,
wherein the low-melting glass comprises at least one of barium glass, boron glass, strontium glass, alumina silicate glass, soda-zinc glass, and soda-barium glass.

7. The gas flow member (10, 110, 210) according to any one of claims 1 to 6,
wherein the gas flow member (10, 110, 210) is an exhaust system component for a turbo housing.

8. The gas flow member (10, 110, 210) according to any one of claims 1 to 6,
wherein the gas flow member (10, 110, 210) is an exhaust system component that serves as a gas inlet portion or a gas outlet portion of an exhaust gas purification apparatus.

## Patentansprüche

1. Gasströmungselement (10, 110,210), aufweisend:
einen Metallsockel (20, 120, 220) mit einer Gasströmungsoberfläche (21, 121, 221); und
eine Oberflächenbeschichtungsschicht (30, 130, 230), die ein amorphes anorganisches Material und ein kristallines anorganisches Material enthält, wobei die Gasströmungsoberfläche (21, 121, 221) des Sockels mit der Oberflächenbeschichtungsschicht (30, 130, 230) beschichtet ist,
wobei das kristalline anorganische Material zumindest eines aufweist, das aus der Gruppe ausgewählt ist, die aus Kalziumoxid, Magnesiumoxid, Ceroxid, Aluminiumoxid und Zirkonoxid besteht,
und wobei die Oberflächenbeschichtungsschicht (30, 130, 230) eine durchschnittliche Dicke von mehr als 50 µm aufweist, **dadurch gekennzeichnet, dass**
die Gasströmungsoberfläche (21, 121, 221) des Sockels eine Oberfläche ist, die eine durchschnittliche Zehnpunktrauheit RzJIS einer Rauheitskurve von 10 bis 50 µm aufweist und eine maximale Welligkeitshöhe Wz einer Welligkeitskurve zwischen 15 und 100 µm aufweist,
die Rauheit und Welligkeit der Gasströmungsoberfläche (21, 121, 221) des Sockels mit der Oberflächenbeschichtungsschicht (30, 130, 230) bedeckt sind, und eine beschichtete Gasströmungsoberfläche (21, 121, 221), die eine Oberfläche ist, die ausgebildet wird, indem die Gasströmungsoberfläche (21, 121, 221) des Sockels mit der Oberflächenbeschichtungsschicht (30, 130, 230) bedeckt wird, eine glatte Oberfläche ist, die eine durchschnittliche Zehnpunktrauheit RzJIS einer Rauheitskurve von 5 µm oder weniger aufweist und außerdem eine flache Oberfläche ist, die eine maximale Welligkeitshöhe Wz einer Welligkeitskurve von 10 µm oder weniger aufweist,
wobei die durchschnittliche Zehnpunktrauheit RzJIS und die maximale Welligkeitshöhe Wz in JIS B0601:2001 spezifiziert sind und mit einem Anhaltewert λs = keine Einstellung, λc = 0,8mm und einer Messdistanz = 4mm gemessen werden.

2. Gasströmungselement (10, 110, 210) nach Anspruch 1,
wobei die Gasströmungsoberfläche (21, 121, 221) des Sockels eine Gussoberfläche ist.

3. Gasströmungselement (10, 110, 210) nach Anspruch 1, wobei die Gasströmungsoberfläche (21, 121, 221) des Sockels eine durch Spinnen bearbeitete Oberfläche ist.

4. Gasströmungselement (10, 110, 210) nach einem der Ansprüche 1 bis 3,
wobei das kristalline anorganische Material zumindest eines von α-Aluminiumoxid und Yttrium-stabilisiertem Zirkonoxid aufweist.

5. Gasströmungselement (10, 110, 210) nach einem der Ansprüche 1 bis 4,
wobei das amorphe anorganische Material aus Glas mit niedrigem Schmelzpunkt mit einem Erweichungspunkt zwischen 300 °C und 1000 °C ausgebildet ist, wobei der Erweichungspunkt auf Basis von JIS R 3103-1:2001 gemessen wird.

6. Gasströmungselement (10, 110, 210) nach Anspruch 5,
wobei das Glas mit niedrigem Schmelzpunkt zumindest eines von Bariumglas, Borglas, Strontiumglas, Aluminiumoxidsilikatglas, Natriumkarbonat-Zinkglas und Natriumkarbonat-Bariumglas aufweist.

7. Gasströmungselement (10, 110, 210) nach einem der Ansprüche 1 bis 6,
wobei das Gasströmungselement (10, 110, 210) ein Abgassystembestandteil für ein Turbogehäuse ist.

8. Gasströmungselement (10, 110, 210) nach einem der Ansprüche 1 bis 6,
wobei das Gasströmungselement (10, 110, 210) ein Abgassystembestandteil ist, der als ein Gaseinlassabschnitt oder ein Gasauslassabschnitt einer Abgasreinigungsvorrichtung dient.

## Revendications

1. Élément de circulation de gaz (10, 110, 210), comprenant :
une base métallique (20, 120, 220) ayant une surface de circulation de gaz (21, 121, 221) ; et
une couche de revêtement de surface (30, 130, 230) contenant un matériau inorganique amorphe et un matériau inorganique cristallin, la surface de circulation de gaz (21, 121, 221) de la base étant revêtue avec la couche de revêtement de surface (30, 130, 230),
dans lequel le matériau inorganique cristallin comprend au moins un sélectionné dans le groupe constitué de l'oxyde de calcium, de la magnésie, de l'oxyde de cérium, de l'alumine, et de la zircone,
et dans lequel la couche de revêtement de surface (30, 130, 230) présente une épaisseur moyenne de plus de 50 µm,
**caractérisé en ce que**
la surface de circulation de gaz (21, 121, 221) de la base est une surface présentant une rugosité moyenne en dix points RzJIS d'une courbe de rugosité de 10 à 50 µm et présentant une hauteur maximale d'ondulation Wz d'une courbe d'ondulation de 15 à 100 µm,
la rugosité et l'ondulation de la surface de circulation de gaz (21, 121, 221) de la base sont recouvertes avec la couche de revêtement de surface (30, 130, 230), et
une surface de circulation de gaz revêtue (21, 121, 221) qui est une surface formée en recouvrant la surface de circulation de gaz (21, 121, 221) de la base avec la couche de revêtement de surface (30, 130, 230) est une surface lisse présentant une rugosité moyenne en dix points RzJIS d'une courbe de rugosité de 5 µm ou moins et est également une surface plate présentant une hauteur maximale d'ondulation Wz d'une courbe d'ondulation de 10 µm ou moins,
dans lequel la rugosité moyenne en dix points RzJIS et la hauteur maximale d'ondulation Wz sont spécifiées dans la norme JIS B0601:2001 et mesurées avec une valeur de coupure λs = pas de réglage, λc = 0,8 mm, et une distance de mesure = 4 mm.

2. Élément de circulation de gaz (10, 110, 210) selon la revendication 1,
dans lequel la surface de circulation de gaz (21, 121, 221) de la base est une surface de coulée.

3. Élément de circulation de gaz (10, 110, 210) selon la revendication 1,
dans lequel la surface de circulation de gaz (21, 121, 221) de la base est une surface traitée par rotation.

4. Élément de circulation de gaz (10, 110, 210) selon l'une quelconque des revendications 1 à 3,
dans lequel le matériau inorganique cristallin comprend au moins l'une parmi une α-alumine et une zircone stabilisée par l'oxyde d'yttrium.

5. Élément de circulation de gaz (10, 110, 210) selon l'une quelconque des revendications 1 à 4,
dans lequel le matériau inorganique amorphe est formé d'un verre à point de fusion bas présentant un point de ramollissement de 300 °C à 1000 °C, dans lequel le point de ramollissement est mesuré sur la base de la norme JIS R 3103-1:2001.

6. Élément de circulation de gaz (10, 110, 210) selon la revendication 5,
dans lequel le verre à point de fusion bas comprend au moins l'un parmi un verre de baryum, un verre de bore, un verre de strontium, un verre de silicate d'alumine, un verre d'oxyde de sodium-zinc, et un verre d'oxyde de sodium-baryum.

7. Élément de circulation de gaz (10, 110, 210) selon l'une quelconque des revendications 1 à 6,
dans lequel l'élément de circulation de gaz (10, 110, 210) est un composant de système d'échappement pour un logement de turbo.

8. Élément de circulation de gaz (10, 110, 210) selon l'une quelconque des revendications 1 à 6,
dans lequel l'élément de circulation de gaz (10, 110, 210) est un composant de système d'échappement qui sert de partie d'entrée de gaz ou de partie de sortie de gaz d'un appareil de purification de gaz d'échappement.
